**Europäisches Patentamt**

(19) **European Patent Office**

**Office européen des brevets**

(11) Veröffentlichungsnummer: **0 291 516 B1**

(12) ## EUROPÄISCHE PATENTSCHRIFT

(45) Veröffentlichungstag der Patentschrift:
06.03.91 Patentblatt 91/10

(51) Int. Cl.[5]: **B60T 17/22**, G01L 9/16

(21) Anmeldenummer: 87906918.5

(22) Anmeldetag: 17.10.87

(86) Internationale Anmeldenummer:
PCT/EP87/00612

(87) Internationale Veröffentlichungsnummer:
WO 88/03491 19.05.88 Gazette 88/11

(54) **ELEKTROHYDRAULISCHE VORRICHTUNG ZUR KONTINUIERLICHEN ÜBERWACHUNG DES DRUCKES IN EINER HYDRAULISCHEN KRAFTFAHRZEUG-BREMSANLAGE.**

(30) Priorität: 14.11.86 DE 3638978

(43) Veröffentlichungstag der Anmeldung:
23.11.88 Patentblatt 88/47

(45) Bekanntmachung des Hinweises auf die
Patenterteilung:
06.03.91 Patentblatt 91/10

(84) Benannte Vertragsstaaten:
FR GB IT SE

(56) Entgegenhaltungen:
DE-A- 3 409 306
FR-A- 2 418 453
US-A- 3 652 985
Patent Abstracts of Japan, volume 6, No 203
(P-148) (1081), 14 October 1982
Patent Abstracts of Japan, volume 10, No 149
(P-461) (2206), 30 May 1986

(73) Patentinhaber: ALFRED TEVES GMBH
Guerickestrasse 7
W-6000 Frankfurt/Main 90 (DE)

(72) Erfinder: JUCKENACK, Dietrich
Lohrbachstrasse 19
W-6380 Bad Homburg (DE)

**Beschreibung**

Elektrohydraulische Vorrichtung zur kontinuierlichen Überwachung des Druckes in einer hydraulischen kraftfahrzeug-Bremsanlage.

Die Erfindung bezieht sich auf eine elektrohydraulische Vorrichtung zur kontinuierlichen Überwachung eines Druckes in einer hydraulischen kraftfahrzeug-Bremsanlage, insbesondere zur Ausgabe elektrischer Steuersignale in Abhängigkeit von zugeführten Drucksignalen, bestehend aus einem zwei koaxiale Bohrungen aufweisenden Gehäuse, einem im Gehäuse angeordneten, mit dem Eingangsdruck beaufschlagbaren, durch eine Membran aus amorphem Metall gebildeten Aufnehmer sowie einem Wandler für die Umwandlung des hydraulischen Druckes in ein elektrisches Ausgangssignal, wobei der Wandler durch ein Spulensystem gebildet ist, mit dem die Membran permeabilitätsändernd zusammenwirkt.

Die Verwendung derartiger Vorrichtungen zum oben erwähnten Zweck ist z.B. aus der US-Patentschrift US-A- 3, 652, 985 bekannt. Die darin offenbarten Alarmsysteme beinhalten Druckwandler, die beispielsweise mit piezoelektrischen Elementen, Widerstandsspannungsmessern oder Drucksensordioden arbeiten und an weitere Signalverarbeitungsschaltungen, wie z.B. Verstärker, Wellenformwandler, Integratorkreise und komparatoren angeschlossen sind. Derartige Systeme sind jedoch von ihrem Aufbau her sehr kompliziert und deshalb kostenintensiv.

Ein für den Einsatz in derartigen Systemen geeigneter Drucksensor ist in der Patent Abstracts of Japan, Band 6, Nr. 203 (P-148) (1081), 14. Oktober 1982, & JP, A, 57111427 (AISHIN SEIKI K.K.) 10. Juli 1982 beschrieben. Der bekannte Drucksensor arbeitet mit einem geschlossenen kreis, dessen magnetischer Fluß in Abhängigkeit von Verformungsgrad einer amorphen Membran geändert wird, die der Wirkung eines hydraulischen Druckes ausgesetzt ist. Die Magnetflußänderungen werden von einem Spulensystem erfaßt, das einen Teil des geschlossenen magnetischen kreises umgreift und an eine außerhalb des Sensorgehäuses angeordnete elektronische Schaltung angeschlossen ist, die eine Auswertung dessen Ausgangssignale durchführt. Im Sensorgehäuse ist außerdem eine mit Öffnungen versehene Haltescheibe angeordnet, in deren Mitte die Membran eingeknöpft ist und die zusammen mit zwei sich überdeckenden Jochen durch einen hohlen zylindrischen Halter gehalten wird.

Als nachteilig wird bei dem vorbekannten Drucksensor vor allem dessen komplizierter und aufwendiger Aufbau empfunden, der ihn für eine Großserienfertigung ungeeignet erscheinen läßt. Die Verwendung der gelochten Haltesscheibe läßt lediglich niedrige Drücke zu, wodurch die Einsetzbarkeit des Sensors erheblich eingeschränkt wird. Außerdem wird die Bewegungsfreiheit der amorphen Membran durch die Haltescheibe beeinflußt, so daß die Ansprechzeiten des Sensors beeinträchtigt werden. Weniger vorteilhaft anzusehen ist auch der erforderliche Anschluß des Spulensystems an die externe elektronische Auswerteschaltung, der erhebliche Störungen bei der Übertragung dessen Ausgangssignale verursachen kann. Ein weiterer Nachteil kann auch darin gesehen werden, daß bei einer Zerstörung bzw. einem Riß in der amorphen Membran kein ausreichender Schutz gegen Austreten des im System verwendeten hydraulischen Druckmittels vorgesehen ist.

Der Erfindung liegt daher die Aufgabe zugrunde, diese Nachteile zu überwinden und eine Vorrichtung zur Überwachung des Druckes in einer hydraulischen Bremsanlage zu entwickeln, die sich vor allem durch einfachen Aufbau, hohe Lebensdauer, hohe Zuverlässigkeit und durch geringen Herstellungsaufwand auszeichnet. Ferner ist eine ausreichende Ansprechempfindlichkeit und eine präzise Reaktionsfähigkeit auf Druckänderungen gefordert.

Es hat sich nun herausgestellt, daß sich diese Aufgabe in einfacher, technische fortschrittlicher Weise durch Weiterbildung einer Vorrichtung der eingangs genannten Art lösen läßt, die darin besteht, daß die Membran an einer Stirnfläche einer die erste Bohrung von der zweiten Bohrung trennenden Trennwand anliegend mittels einer Stiftschraube im Randbereich eingespannt ist, wobei die Trennwand eine axiale Ausnehmung aufweist und das Spulensystem in der zweiten Bohrung angeordnet ist und dessen Ausgangssignale einer im Gehäuse angeordneten Auswerteelektronik zuführbar sind.

Durch diese Maßnahme wird eine besonders wirksame preis-/leistungsmäßige Lösung erreicht, die sich durch eine sehr hohe mechanische Festigkeit (statisch und dynamisch) des Aufnehmerteiles sowie dessen hohe Auflösung auszeichnet, so daß auch sehr kleine Druckänderungen wahrgenommen werden.

Um die Empfindlichkeit der elektrohydraulischen Vorrichtung nach der Erfindung zu erhöhen, ist die Membran rechteckförmig ausgebildet, wobei sie so angeordnet ist, daß ihre Längsachse senkrecht zur Längsachse des Spulensystems verläuft.

Eine besonders raumsparende Anordnung der erfindungsgemäßen Vorrichtung wird dadurch erreicht, daß in der zweiten Bohrung eine mit deren Wandung parallel verlaufende zylindrische Trennwand vorgesehen ist, die die zweite Bohrung in einem Ringraum in einen Innenraum unterteilt ist, während der Innenraum für die Aufnahme der Auswertelektronik vorgesehen ist.

2

EP 0 291 516 B1

Weitere Einzelheiten und Vorteile der erfindungsgemäßen Vorrichtung ergeben sich aus den Unteransprüchen sowie aus der Beschreibung von zwei Ausführungsbeispielen der Erfindung, die nachfolgend anhand der beiliegenden Zeichnung näher erläutert sind, wobei einander entsprechende Teile mit den gleichen Bezugszeichen versehen sind.

Es zeigen in schematisch vereinfachter Darstellung :

Fig. 1 ein Schaltbild einer hydraulischen Zweikreis-Bremsanlage für ein Kraftfahrzeug mit einem Teillängsschnitt durch einen Bremsdruckgeber,

Fig. 2 eine erste Ausführungsform der erfindungsgemäßen Vorrichtung im Längsschnitt,

Fig. 3 eine andere Ausführungsform der erfindungsgemäßen Vorrichtung im Längsschnitt.

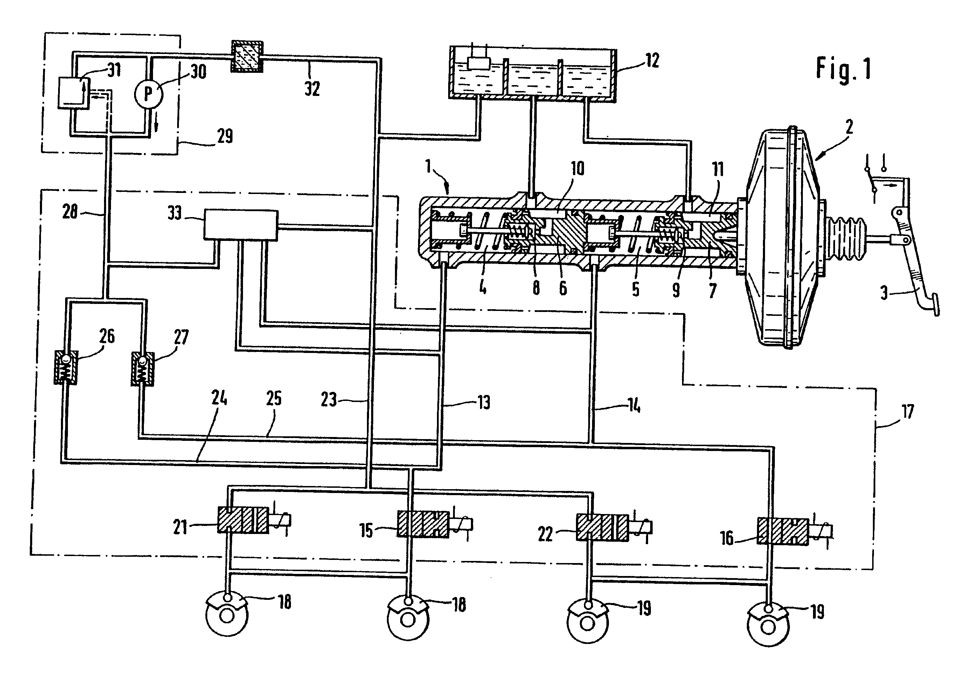

Der in Fig. 1 dargestellte Bremsdruckgeber besteht aus einem Tandem-Hauptbremszylinder 1 und einem Vakuumbremskraftverstärker 2, der durch ein Bremspedal 3 betätigbar ist.

Der im Schnitt dargestellte Tandem-Hauptbremszylinder 1 weist zwei getrennte Arbeitskammern 4, 5 auf, die durch einen Betätigungshub der Hauptzylinderkolben 6, 7 verkleinerbar sind. Die Arbeitskammern 4, 5 sind über Zentralventile 8, 9, die in der dargestellten Grundstellung offen sind, mit Nachlaufräumen 10, 11 verbindbar, die an einen drucklosen Nachlaufbehälter 12 angeschlossen sind.

Von den Arbeitskammern 4, 5 des Tandem-Hauptbremszylinders 1 führen Bremsleitungen 13, 14 zweier Bremskreise zu stromlos offenen Magnetventilen 15, 16 einer nicht näher dargestellten Bremsschlupfregeleinrichtung, die in einem Ventilblock 17 angeordnet ist. An die Magnetventile 15, 16 sind je zwei Radbremsen 18 bzw. 19 angeschlossen, von denen jeweils eine einem Vorderrad eines Fahrzeuges und die andere einem diagonal zum Vorderrad liegenden Hinterrad des Fahrzeuges zugeordnet ist. Es handelt sich somit um eine ZweikreisBremsanlage mit diagonaler Kreisaufteilung.

Die Radbremsen 18 und 19 sind weiterhin an zwei stromlos geschlossenen Magnetventilen 21, 22 des Ventilblocks 17 angeschlossen, deren Eingangsseite über eine Rücklaufleitung 23 mit dem Nachlaufbehälter 12 verbunden ist. Von jeder Bremsleitung 13, 14 zweigt eine Druckleitung 24, 25 ab. Jede Druckleitung 24, 25 führt zu einem separaten, in der Grundstellung geschlossenen Rückschlagventil 26, 27, das ebenfalls im Ventilblock 17 untergebracht ist. Die Rückschlagventile 26, 27 sind so angeordnet, daß sie nur zu den Druckleitungen 24, 25 hin öffnen. Von den Rückschlagventilen 26, 27 führt eine Druckleitung 28 zu einem Pumpenaggregat 29, das aus einer elektromotorisch angetriebenen Pumpe 30 und einem Überdruckventil 31 besteht und das über eine Saugleitung 32 an den Behälter 12 angeschlossen ist.

Um den hydraulischen Druck in der Druckleitung 28 des Pumpenaggregates 29 zu überwachen, ist eine elektrohydraulische Vorrichtung 33 vorgesehen, die ebenfalls in dem Ventilblock 17 angeordnet ist und die an die Druckleitung 28, die Bremsleitungen 13, 14 und die Rücklaufleitung 23 angeschlossen ist.

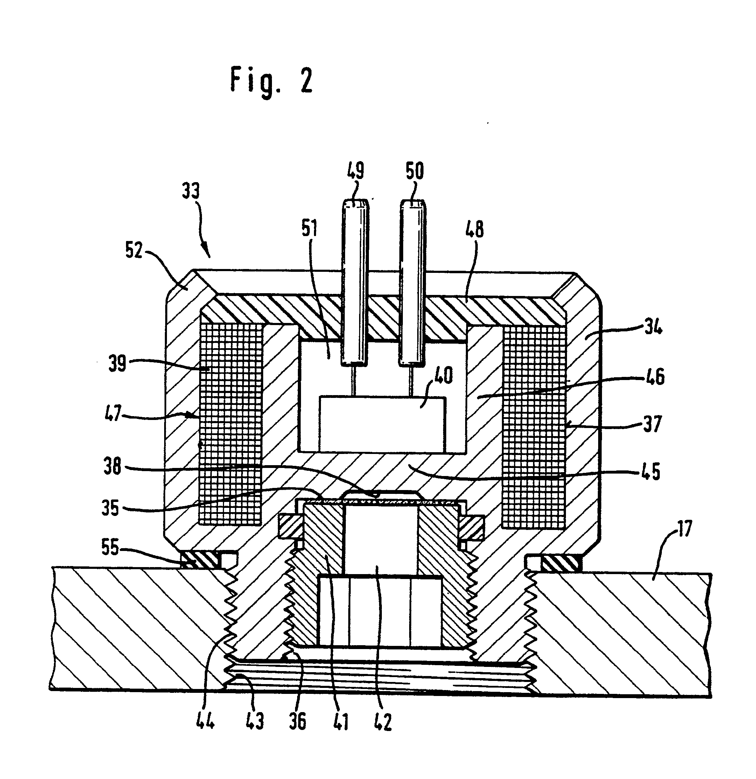

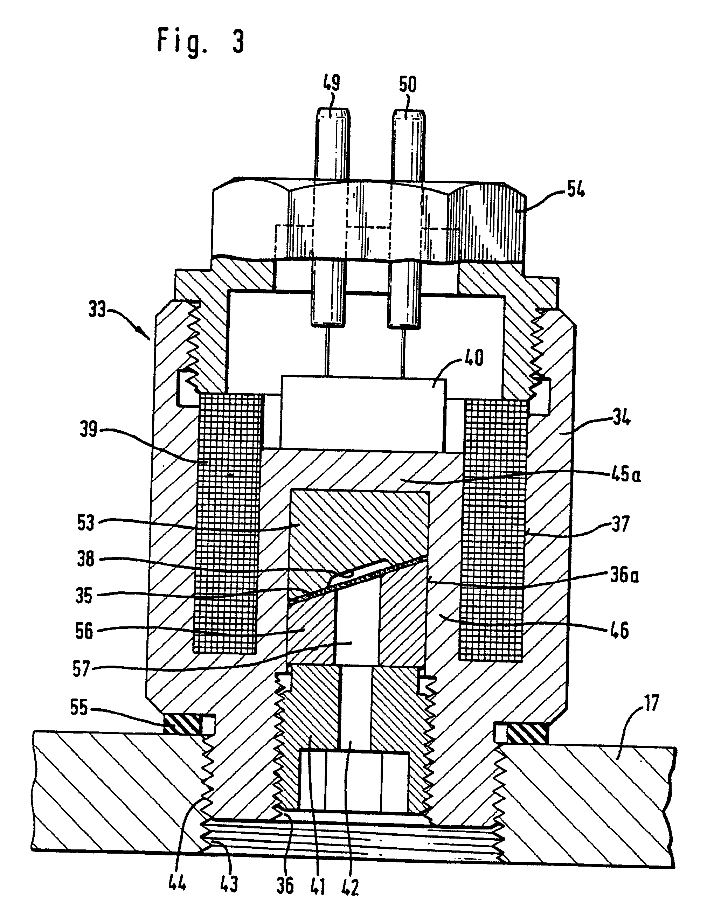

Die erfindungswesentliche Ausbildung dieser elektrohydraulischen Vorrichtung 33 ist im Zusammenhang mit Fig. 2 und 3 erläutert.

In der Zeichnung ist mit 34 ein Gehäuse der elektrohydraulichen Vorrichtung 33 bezeichnet, das in einer Bohrung 43 des im Zusammenhang mit Fig. 1 erwähnten Ventilblocks 17 eingeschraubt ist. Die Verschraubung mit dem Ventilblock 17 wird durch ein Außengewinde 44 ermöglicht, das am Gehäuse 34 angeformt ist. Das Gehäuse 34 verfügt über zwei koaxiale Bohrungen 36 und 37, die voneinander durch eine senkrecht zur Längsachse des Gehäuses 34 verlaufende Trennwand 45 getrennt sind, wobei die Bohrung 37 einen größeren Druchmesser aufweist. Um eine Leckage des hydraulischen Druckmittels, bedingt durch das zwischen dem Außengewinde 44 und dem Innengewinde der Wandung der Bohrung 41 vorhandene Spiel, zu vermeiden, ist ein Dichtring 55 vorgesehen, der zwischen der Oberfläche des Ventilblocks 17 und dem Gehäuse 34 eingeklemmt ist.

In der durch die Trennwand 45 begrenzten Bohrung 36 ist senkrecht zu deren Längsachse eine Membran 35 aus amorphen Metall angeordnet, die an der Trennwand 45 dichtend anliegt und in ihrem Randbereich dagegen mittels einer in der Bohrung 36 eingeschraubten Stiftschraube 41 mit Innensechskant gedrückt wird. Um die Membran 35 mit dem in der Bremsanlage herrschenden hydraulischen Druck beaufschlagen zu können, ist die Stiftschraube 41 mit einem axialen Durchgang 42 versehen, wobei die Trennwand 45 eine axiale Ausnehmung 38 aufweist, die ein Ausbeulen der Membran 35 unter der Einwirkung des hydraulischen Druckes ermöglicht.

In der zweiten Bohrung 37 größeren Durchmessers erstreckt sich parallel zu deren Wandung eine zylindrische Trennwand 46, die das Innere der zweiten Bohrung 37 in einen radial außenliegenden Ringraum 47 und einen innenliegenden Innenraum 51 unterteilt. Im Ringraum 47 ist ein ortfestes Spulensystem 39 untergebracht, das durch eine Sender- und eine Empfängerspule gebildet ist, die in den Figuren jedoch nicht näher dargestellt sind und Bestandteile einer Brückenschaltung bilden. Die Anordnung der Membran 35 ist bei diesem Ausführungsbeipiel vorzugsweise derart getroffen, daß die die Membran 35 enthaltende Ebene senkrecht zur Längsachse des Spulensystems 39 verläuft und gleichzeitig eine Schnittebene des kreiszylinderförmigen Spulensystems 39 darstellt. Im Rahmen einer optimalen Ausnutzung sämtlicher im Gehäuse

3

34 vorhandener Räume nimmt der Innenraum 51 eine Auswerteelektronik 40 auf, die, außer dem die Senderspule mit unterschiedlichsten Anregungsformen (Sinus, Dreieck, Sägezahn, Rechteck u.a.) speisenden Generator alle zur Auswertung des druckabhängigen Ausgangssignals des Spulensystems 39 benötigten Elemente enthält. Die Auswerteelektronik 40 steht ihrerseits mit z.B. zwei nur schematisch dargestellten Kontaktstiften 49, 50 in Verbindung, die zur Weiterverarbeitung der elektrischen Signale dienen. Die Kontaktstifte 49, 50, die z.B. als Kontaktmesser für einen Gegenstecker ausgebildet sein können, gehen dabei durch eine Kontaktstiftplatte 48 hindurch, die das Gehäuse 34 verschließt und mittels einer Bördelung 52 an dessen Ende gehalten wird.

Bei dem in Fig. 3 gezeigten Ausführungsbeispiel der erfindungsgemäßen Vorrichtung liegt die Membran 35 in einer Ebene, die schräg zur Längsachse des Spulensystems 39 verläuft und gleichzeitig dessen Schnittebene darstellt. Die Membran 35 ist dabei zwischen zwei Druckstücken 53, 56 eingespannt, die in einer axialen Verlängerung 36a der ersten Bohrung 36 angeordnet sind, die in axialer Richtung durch eine radiale Trennwand 45a begrenzt ist. Die im Zusammenhang mit Fig. 2 erwähnte axiale Ausnehmung 38 ist bei dieser Ausführung in dem der radialen Trennwand 45a zugewandten Druckstück 53 ausgebildet, während das andere Druckstück 56 einen axialen Kanal 57 aufweist, der koaxial mit dem Durchgang 42 der Stiftschraube 41 verläuft und die Zufuhr des hydraulischen Druckmittels zur Membran 35 ermöglicht. Die mit dem Spulensystem 39 zusammenwirkende Auswerteelektronik 40 ist an der dem Druckstück 53 abgewandten Stirnseite der radialen Trennwand 45a angeordnet und kann, wie aus Fig. 3 ersichtlich ist, in eine axiale Verlängerung eines Gewindestopfens 54 hineinragen, der das Gehäuse 34 der elektrohydraulischen Vorrichtung verschließt. Ähnlich wie bei der in Fig. 2 gezeigten Ausführung kann der Gewindestopfen 54 Kontaktstifte 49, 50 aufweisen.

Die Wirkungsweise der oben beschriebenen elektrohydraulischen Vorrichtung nach der Erfindung ist folgende :

In der Ruhestellung der Vorrichtung (druckloser Zustand der hydraulischen Bremsanlage) befindet sich die aus einem geeigneten amorphen Metall hergestellte Membran 35 in der aus Fig. 2 und 3 ersichtlichen Stellung. Bei einer Erhöhung des in der Bremsanlage herrschenden hydraulischen Druckes wird die Membran 35 unter der Einwirkung des Druckmittels in Richtung auf die Ausnehmung 38 zu ausgebeult. Infolgedessen tritt eine Permeabilitätsänderung durch Magnetostrikion des amorphen Metalls auf, die im ortsfesten Spulensystem 39 eine "Übersprechung" von der Sender- zur Empfängerspule generiert, die in der Auswerteelektronik 40 in eine analoge, druckabhängige kontinuierliche Ausgangsinformation umgewandelt wird, die in einem einen Bestandteil der im Zusammenhang mit Fig. 1 erwähnten Bremsschlupfregeleinrichtung bildenden elektronischen Regler einer Weiterverarbeitung unterzogen wird. Läßt der auf die Membran 35 einwirkende Druck nach, so kehrt diese in Folge ihrer Eigenelastizität in ihre Ausgangsstellung zurück.

Bezugszeichenliste

| | |
|---|---|
| 1 | Tandem-Hauptzylinder |
| 2 | Vakuumverstärker |
| 3 | Bremspedal |
| 4 | Arbeitskammer |
| 5 | Arbeitskammer |
| 6 | Hauptzylinderkolben |
| 7 | Hauptzylinderkolben |
| 8 | Zentralventil |
| 9 | Zentralventil |
| 10 | Nachlaufraum |
| 11 | Nachlaufraum |
| 12 | Nachlaufbehälter |
| 13 | Bremsleitung |
| 14 | Bremsleitung |
| 15 | Magnetventil |
| 16 | Magnetventil |
| 17 | Ventilblock |
| 18 | Radbremsen |
| 19 | Radbremsen |
| 20 | – |
| 21 | Magnetventil |
| 22 | Magnetventil |
| 23 | Rücklaufbleitung |
| 24 | Druckleitung |
| 25 | Druckleitung |
| 26 | Rücksclagventil |
| 27 | Rückschlagventil |
| 28 | Druckleitung |
| 29 | Pumpenaggregat |

| | |
|---|---|
| 30 | Pumpe |
| 31 | Überdruckventil |
| 32 | Leitung |
| 33 | elektrohydraulische Vorrichtung |
| 34 | Gehäuse |
| 35 | Membran |
| 36 | Bohrung |
| 37 | Bohrung |
| 38 | Ausnehmung |
| 39 | Spulensystem |
| 40 | Auswerteelektronik |
| 41 | Stiftschraube |
| 42 | Durchgang |
| 43 | Bohrung |
| 44 | Außengwinde |
| 45 | Trennwand |
| 45a | radiale Trennwand |
| 46 | zylindrische Trennwand |
| 47 | Ringraum |
| 48 | Kontaktstiftenplatte |
| 49 | Kontaktstifte |
| 50 | Kontaktstift |
| 51 | Inneraum |
| 52 | Bördelung |
| 53 | Druckstück |
| 54 | Gewindestopfen |
| 55 | Dichtring |
| 56 | Druckstück |
| 57 | Kanal |

**Ansprüche**

1. Elektrohydraulische Vorrichtung zur kontinuierlichen Überwachung des Druckes in einer hydraulischen kraftfahrzeug-Bremsanlage, insbesondere zur Ausgabe elektrischer Steuersignale in Abhängigkeit von zugeführten Drucksignalen, bestehend aus einem zwei koaxiale Bohrungen aufweisenden Gehäuse, einem im Gehäuse angeordneten, mit dem Eingangsdruck beaufschlagbaren, durch eine Membran aus amorphem Metall gebildeten Aufnehmer sowie einem Wandler für die Umwandlung des hydraulischen Druckes in ein elektrisches Ausgangssignal, wobei der Wandler durch ein Spulensystem gebildet ist, mit dem die Membran permeabilitätsändernd zusammmenwirkt, wobei die Membran (35) an einer Stirnfläche einer die erste Bohrung (36) von der zweiten Bohrung (37) trennenden Trennwand (45) anliegend mittels einer Stiftschraube (41) im Randbereich eingespannt ist, wobei die Trennwand (45) eine axiale Ausnehmung (38) aufweist und das Spulensystem (39) in der zweiten Bohrung (37) angeordnet ist und dessen Ausgangssignale einer im Gehäuse (34) angeordneten Auswerteelektronik (40) zuführbar sind.

2. Elektrohydraulische Vorrichtung nach Anspruch 1, dadurch **gekennzeichnet**, daß die Membran (35) zwischen zwei in einer axialen Verlängerung (36a) der ersten Bohrung (36) gegenüberliegend angeordneten Druckstücken (53, 56) eingespannt ist, wobei das der Stiftschraube (41) zugewandte Druckstück (56) mit einem axialen kanal (57) und das gegenüberliegende Druckstück (53) mit der axialen Ausnehmung (38) versehen sind.

3. Elektrohydraulische Vorrichtung nach Anspruch 1, dadurch **gekennzeichnet**, daß die Membran (35) in einer senkrecht zur Längsachse des Spulensystems (39) stehenden Ebene angeordnet ist.

4. Elektrohydraulische Vorrichtung nach Anspruch 2, dadurch **gekennzeichnet**, daß die Membran (35) in einer schräg zur Längsachse des Spulensystems (39) verlaufenden Ebene angeordnet ist.

5. Elektrohydraulische Vorrichtung nach einem der Ansprüche 1 bis 4, dadurch **gekennzeichnet**, daß die Membran (35) rechteckförmig ausgebildet und so angeordnet ist, daß ihre Längsachse senkrecht zur Längsachse des Spulensystems (39) verläuft.

6. Elektrohydraulische Vorrichtung nach einem der Ansprüche 1, 3 und 5, dadurch **gekennzeichnet**, daß in der zweiten Bohrung (37) eine mit deren Wandung parallel verlaufende zylindrische Trennwand (46) vorgesehen ist, die die zweite Bohrung (37) in einen Ringraum (47) und einen Innenraum (51) unterteilt.

7. Elektrohydraulische Vorrichtung nach Anspruch 2 oder 4, dadurch **gekennzeichnet**, daß die axiale Verlängerung (36a) der ersten Bohrung (36) durch die zylindrische Trennwand (46) sowie eine radiale Trennwand (45a) begrenzt ist, an deren der Membran (35) abgewandter Stirnfläche die Auswerteelektronik (40) angeordnet ist.

8. Elektrohydraulische Vorrichtung nach Anspruch 6, dadurch **gekennzeichnet**, daß das Spulensystem (39) im Ringraum (47) angeordnet ist, während der Innenraum (51) für die Aufnahme der Auswerteelektronik (40) vorgesehen ist.

9. Elektrohydraulische Vorrichtung nach Anspruch 7, dadurch **gekennzeichnet**, daß das Spulensystem (39) außerhalb der zylindrischen Trennwand (46) in der zweiten Bohrung (37) angeordnet ist.

10. Elektrohydraulische Vorrichtung nach Anspruch 1 bis 9, dadurch **gekennzeichnet**, daß die die Membran (35) enthaltende Ebene eine Schnittebene des kreiszylinderförmigen Spulensystems (39) darstellt.

11. Elektrohydraulische Vorrichtung nach Anspruch 1 bis 10, dadurch **gekennzeichnet**, daß die Zufuhr des hydraulischen Druckmittels zur Membran (35) mittels eines in der Stiftschraube (41) axial verlaufenden Durchganges (42) erfolgt.

12. Elektrohydraulische Vorrichtung nach Anspruch 1 bis 11, dadurch **gekennzeichnet**, daß die Membran (35) mehrschichtig ausgebildet ist.

13. Elektrohydraulische Vorrichtung nach einem der Ansprüche 1 bis 12, dadurch **gekennzeichnet**, daß das Gehäuse (34) an seinem dem Druckmittel abgewandten Ende mittels eines Gewindestopfens (54) verschlossen ist, in dessen Verlängerung die Auswerteelektronik (40) untergebracht ist.

14. Elektrohydraulische Vorrichtung nach einem der Ansprüche 1 bis 13, dadurch **gekennzeichnet**, daß das Gehäuse (34) an seinem dem Druckmittel abgewandten Ende mittels einer Kontaktstifte (49, 50) tragenden kontaktstiftplatte (48) verschlossen ist, die mittels einer Bördelung (52) im Gehäuse (34) fixiert ist.

**Claims**

1. An electrohydraulic device for continuously monitoring the pressure in a hydraulic brake system for automotive vehicles, in particular for issuing electric control signals in dependence upon applied pressure signals, the said device being composed of a housing having two coaxial bores, a receiver that is formed of a membrane of amorphous metal, that is arranged in the housing and to which inlet pressure is applicable, as well as of a converter for converting the hydraulic pressure into an electric output signal, with the converter being formed by a coil system with which the membrane is cooperating so as to change permeability, the said membrane (35) abutting on an end surface of a partition wall (45) isolating the first bore (36) from the second bore (37) and being clamped in its fringe area by means of a setscrew (41), the said partition wall (45) comprising an axial recess (38), and with the coil system (39) being arranged in the second bore (37) and its output signals being adapted to be supplied to an evaluating electronic system (40) arranged in the housing (34).

2. An electrohydraulic device as claimed in claim 1, **characterized** in that the membrane (35) is clamped in between two pressure members (53, 56) which are opposingly placed in an axial extension (36a) of the first bore (36), with the pressure member (56) facing the setscrew (41) being provided with an axial channel (57) and the opposite pressure member (53) being provided with the axial recess (38).

3. An electrohydraulic device as claimed in claim 1, **characterized** in that the membrane (35) is arranged in a plane disposed vertically to the longitudinal axis of the coil system (39).

4. An electrohydraulic device as claimed in claim 2, **characterized** in that the membrane (35) is arranged in a plane disposed transversely to the longitudinal axis of the coil system (39).

5. An electrohydraulic device as claimed in any one of the claims 1 to 4, **characterized** in that the membrane (35) is of rectangular design and is arranged such that its longitudinal axis extends vertically to the longitudinal axis of the coil system (39).

6. An electrohydraulic device as claimed in any one of the claims 1, 3 and 5, **characterized** in that in the second bore (37), there is provision of a cylindrical partition wall (46) extending in parallel to said bore's wall and subdividing the second bore (37) into an annular chamber (47) and an inside chamber (51).

7. An electrohydraulic device as claimed in claim 2 or 4, **characterized** in that the axial extension (36a) of the first bore (36) is confined by the cylindrical partition wall (46) as well as by a radial partition wall (45a), at the end surface of which remote from the membrane (35) the evaluating electronic system (40) is arranged.

8. An electrohydraulic device as claimed in claim 6, **characterized** in that the coil system (39) is placed in the annular chamber (47), whilst the inside chamber (51) is destined to accommodate the evaluating electronic system (40).

9. An electrohydraulic device as claimed in claim 7, **characterized** in that the coil system (39) is placed outside of the cylindrical partition wall (46) in the second bore (37).

10. An electrohydraulic device as claimed in claims 1 to 9, **characterized** in that the plane containing the membrane (35) represents a sectional plane of the circular-cylindrical coil system (39).

11. An electrohydraulic device as claimed in claims 1 to 10, **characterized** in that the supply of the hydraulic pressure fluid to the membrane (35) takes place via a passage (42) axially extending in the setscrew (41).

12. An electrohydraulic device as claimed in claims 1 to 11, **characterized** in that the membrane (35) is of multi-layer design.

13. An electrohydraulic device as claimed in any one of the claims 1 to 12, **characterized** in that, on its end remote from the pressure fluid, the housing (34) is closed by a threaded plug (54) in whose extension the evaluatingelectronic system (40) is incorporated.

14. An electrohydraulic device as claimed in any one of the claims 1 to 13, **characterized** in that, on its end remote from the pressure fluid, the housing (34) is closed by means of a contact pin board (48) carrying contact pins (49, 50), the said board being fixed in the housing (34) by means of a beaded joint (52).

## Revendications

1. Dispositif électrohydraulique permettant la surveillance continue de la pression régnant dans une installation hydraulique de freinage pour véhicule automobile, notamment en vue de la délivrance de signaux électriques de commande en fonction de signaux de pression appliqués au dispositif, ce dispositif comprenant un boîtier, comportant deux alésages coaxiaux, un capteur, disposé dans ce boîtier, pouvant être soumis à la pression d'entrée et constitué d'une membrane en métal amorphe, ainsi qu'un transducteur permettant la transformation de la pression hydraulique en un signal électrique de sortie, ce transducteur étant constitué par un ensemble de bobines avec lequel la membrane coopère d'une manière modifiant la perméabilité, dispositif dans lequel, à l'aide d'un goujon fileté (41), la membrane (35) est serrée, dans sa zone marginale, en appui sur une surface frontale d'une cloison (45) séparant le premier alésage (36) du second alésage (37), cette cloison séparatrice (45) comportant un évidement axial (38), et en ce que l'ensemble de bobines (39) est disposé dans le second alésage (37), ses signaux de sortie pouvant être envoyés à un circuit électronique d'exploitation (40) disposé dans le boîtier (34).

2. Dispositif électrohydraulique suivant la revendication 1, caractérisé en ce que la membrane (35) est serrée entre deux pièces de pression (53, 56) disposées face à face dans un prolongement axial (36a) du premier alésage (36), la pièce de pression (56) située du côté du goujon fileté (41) présentant un conduit axial (57) et la pièce de pression (53) située du côté opposé étant pourvue d'un évidement axial 38 .

3. Dispositif électrohydraulique suivant la revendication 1, caractérisé en ce que la membrane (35) est disposée dans un plan situé perpendiculairement à l'axe longitudinal de l'ensemble de bobines (39).

4. Dispositif électrohydraulique suivant la revendication 2, caractérisé en ce que la membrane (35) est disposée dans un plan s'étendant d'une manière inclinée par rapport à l'axe longitudinal de l'ensemble de bobines (39).

5. Dispositif électrohydraulique suivant l'une des revendications 1 à 4, caractérisé en ce que la membrane (35) a une forme rectangulaire, et en ce qu'elle est disposée de façon que son grand axe s'étende perpendiculairement à l'axe longitudinal de l'ensemble de bobines (39).

6. Dispositif électrohydraulique suivant l'une des revendications 1, 3 et 5, caractérisé en ce que, dans le second alésage (37), il est prévu une cloison cylindrique séparatrice (46) qui s'étend parallèlement à la paroi de ce second alésage (37) et divise ce dernier en une chambre annulaire (47) et une chambre intérieure (51).

7. Dispositif électrohydraulique suivant la revendication 2 ou 4, caractérisé en ce que le prolongement axial (36a) du premier alésage (36) est délimité par la cloison cylindrique séparatrice (46), ainsi que par une cloison séparatrice radiale (45a), le circuit électronique d'exploitation (40) étant disposé sur la surface frontale de cette cloison séparatrice radiale (45a) qui est située à l'opposé de la membrane (35).

8. Dispositif électrohydraulique suivant la revendication 6, caractérisé en ce que l'ensemble de bobines (39) est disposé dans la chambre annulaire (47), tandis que la chambre intérieure (51) est prévue pour loger le circuit électronique d'exploitation (40).

9. Dispositif électrohydraulique suivant la revendication 7, caractérisé en ce que l'ensemble de bobines (39) est disposé dans le second alésage (37) à l'extérieur de la paroi séparatrice cylindrique (46).

10. Dispositif électrohydraulique suivant la revendication 1 à 9, caractérisé en ce que le plan contenant la membrane (35) constitue un plan de coupe de l'ensemble de bobines (39) de forme cylindrique à section circulaire.

11. Dispositif électrohydraulique suivant la revendication 1 à 10, caractérisé en ce que l'amenée de l'agent hydraulique de pression à la membrane (35) s'effectue par un passage (42) s'étendant axialement dans le goujon fileté (41).

12. Dispositif électrohydraulique suivant la revendication 1 à 11, caractérisé en ce que la membrane (35) est à plusieurs couches.

13. Dispositif électrohydraulique suivant l'une des revendications 1 à 12, caractérisé en ce que, à son extrémité située à l'opposé de l'agent de pression, le boîtier (34) est fermé par un bouchon fileté (54) dans un prolongement duquel est monté le circuit électronique d'exploitation (40).

14. Dispositif électrohydraulique suivant l'une des revendications 1 à 13, caractérisé en ce que, à son extrémité située à l'opposé de l'agent de pression, le boîtier (34) est fermé par une plaque à broches de contact (48) qui porte des broches de contact (49, 50) et est fixée dans le boîtier (34) à l'aide d'un sertissage (52).

Fig. 1

# Fig. 2

Fig. 3